# EUROPEAN PATENT APPLICATION

(11) **EP 4 845 086 A1**
(43) Date of publication of application: **25.11.2026**
(21) Application number: 25075003.1
(22) Date of filing: 20.05.2025
(51) Int. Cl.: H04L 9/00, H04L 9/32

(54) **METHOD, APPARATUS AND COMPUTER PROGRAM FIELD**

(71) Applicant: Nokia Technologies Oy, 02610 Espoo (FI)
(72) Inventor: Heydari, Beni Emad, 2547 Lint (BE); Hoste, Lode, 2540 Hove (BE); Van Leeuwen, Barry, 3001 Heverlee (BE); Swalens, Janwillem, 1000 Brussel (BE); Rivinius, Marc, 70563 Stuttgart (DE)
(74) Representative: Ipsilon Belgium

(57) **Abstract**

There is provided a method, apparatus and computer program for causing an apparatus to perform: receiving a first encrypted audio signal from a first user, wherein the first encrypted audio signal is encrypted using a homomorphic encryption algorithm; identifying a second user as an intended recipient of the first encrypted audio signal; without homomorphically decrypting the first encrypted audio signal, performing one or more computations on the first encrypted audio signal using a first algorithm to form a first computed encrypted audio signal that combines the first encrypted audio signal with one or more other signals, wherein the one or more other signals identifies the second user in the first computed encrypted audio signal; and providing the first computed encrypted audio signal to the second user.

## Description

The present application relates methods, apparatus, and computer programs associated with homomorphically encrypted audio signal(s).

### BACKGROUND

In digital communication systems, digital encryption is used over the wireless or wireline communication link to make it less likely that an interceptor of transmitted encrypted data can read the intercepted data.

For many encryption methods in digital mobile communication systems, a user-specific encryption key is established for each call at a user equipment (UE) and at an access network node (e.g., a gNB) serving the UE. After encoding a digitized speech unit to compress the speech information, channel encoding is performed for the speech data. The output of the channel encoder is encrypted. The encrypted data transmitted from the UE is then deciphered at the network access node and/or at a server accessible via the network access node. After deciphering, the network access node may pass the deciphered speech data to further transmission, for instance towards a Public Switched Telephone Network (PSTN) so that the intended recipient may receive the call.

Such methods are not considered private as there is an intermediate entity between the transmitter (e.g., a UE) and the intended recipient (e.g., another UE). To address this, end-to-end encryption (E2EE) methods have been developed. E2EE is a security method that keeps messages private between two communicating users, preventing anyone else from accessing the data. This includes the communication system provider, internet service provider, or malicious actors.

### SUMMARY

According to a first aspect, there is provided an apparatus comprising means for performing: receiving a first encrypted audio signal from a first user, wherein the first encrypted audio signal is encrypted using a homomorphic encryption algorithm; identifying a second user as an intended recipient of the first encrypted audio signal; without homomorphically decrypting the first encrypted audio signal, performing one or more computations on the first encrypted audio signal using a first algorithm to form a first computed encrypted audio signal that combines the first encrypted audio signal with one or more other signals, wherein the one or more other signals identifies the second user in the first computed encrypted audio signal; and providing the first computed encrypted audio signal to the second user.

According to a second aspect, there is provided an apparatus comprising: at least one processor; and at least one memory comprising code that, when executed by the at least one processor, causes the apparatus to perform: receiving a first encrypted audio signal from a first user, wherein the first encrypted audio signal is encrypted using a homomorphic encryption algorithm; identifying a second user as an intended recipient of the first encrypted audio signal; without homomorphically decrypting the first encrypted audio signal, performing one or more computations on the first encrypted audio signal using a first algorithm to form a first computed encrypted audio signal that combines the first encrypted audio signal with one or more other signals, wherein the one or more other signals identifies the second user in the first computed encrypted audio signal; and providing the first computed encrypted audio signal to the second user.

According to a third aspect, there is provided a method for an apparatus, the method comprising: receiving a first encrypted audio signal from a first user, wherein the first encrypted audio signal is encrypted using a homomorphic encryption algorithm; identifying a second user as an intended recipient of the first encrypted audio signal; without homomorphically decrypting the first encrypted audio signal, performing one or more computations on the first encrypted audio signal using a first algorithm to form a first computed encrypted audio signal that combines the first encrypted audio signal with one or more other signals, wherein the one or more other signals identifies the second user in the first computed encrypted audio signal; and providing the first computed encrypted audio signal to the second user.

According to a fourth aspect, there is provided an apparatus comprising: receiving circuitry for receiving a first encrypted audio signal from a first user, wherein the first encrypted audio signal is encrypted using a homomorphic encryption algorithm; identifying circuitry for identifying a second user as an intended recipient of the first encrypted audio signal; performing circuitry for, without homomorphically decrypting the first encrypted audio signal, performing one or more computations on the first encrypted audio signal using a first algorithm to form a first computed encrypted audio signal that combines the first encrypted audio signal with one or more other signals, wherein the one or more other signals identifies the second user in the first computed encrypted audio signal; and providing circuitry for providing the first computed encrypted audio signal to the second user.

The following may apply in respect of any (e.g., one or more, including all) of the above first to fourth aspects.

The one or more other signals may comprise at least one of: a spread spectrum signal, a signal replicating at least one property of noise; a signal formed using echo modulation; or a signal formed based on at least one machine learning inference.

The performing one or more computations may comprise: associating a first random value to the second user; determining a label for the one or more other signals based on at least one of a session identifier, a user identifier of the second user, the first random value, a public homomorphic key associated with the homomorphic encryption algorithm, or a timestamp at which the one or more other signals is to be played out in a homomorphically decrypted form of the first computed encrypted audio signal; homomorphically encrypting the one or more other signals using the homomorphic encryption algorithm to form one or more encrypted other signals; and combining the one or more encrypted other signals and the first encrypted audio signal.

The apparatus may be caused to perform: receiving a third encrypted audio signal from a third user, wherein the third encrypted audio signal is encrypted using a homomorphic encryption algorithm; and without homomorphically decrypting the third encrypted audio signal, performing one or more computations to comprise the third encrypted audio signal in the first computed encrypted audio signal.

The apparatus may be caused to perform: receiving a fourth encrypted audio signal from the second user, wherein the fourth encrypted audio signal is encrypted using a homomorphic encryption algorithm; identifying the first user as an intended recipient of the fourth encrypted audio signal; without homomorphically decrypting the fourth encrypted audio signal, performing one or more computations on the fourth encrypted audio signal using the first algorithm to form a second computed encrypted audio signal that combines the fourth encrypted audio signal with at least one other signal, wherein the at least one other signal identifies the first user in the second computed encrypted audio signal; and providing the second computed encrypted audio signal to the first user.

The first encrypted audio signal may be further encrypted by a first symmetric key, and the apparatus may be caused to perform: decrypting the first encrypted audio signal before performing said one or more computations on the first encrypted audio signal.

The apparatus may be caused to perform: encrypting the first computed encrypted audio signal using a second symmetric key before said providing the first computed encrypted audio signal to the second user.

The one or more other signals may comprise audio data at predetermined time intervals.

According to a fifth aspect, there is provided an apparatus comprising means for performing: receiving, from another apparatus, at least part of a first encrypted audio signal that corresponds to at least one location of one or more signals, wherein said one or more signals comprises information identifying a user, and wherein the at least part of the first encrypted audio signal is encrypted using a homomorphic encryption algorithm; without homomorphically decrypting the at least part of the first encrypted audio signal, generating, for each user of a plurality of users, a respective second encrypted signal, wherein the respective second encrypted signal corresponds to a computation on the at least part of the first encrypted audio signal with another encrypted signal that identifies a respective user; and providing the another apparatus with the respective second encrypted signals.

According to a sixth aspect, there is provided an apparatus comprising: at least one processor; and at least one memory comprising code that, when executed by the at least one processor, causes the apparatus to perform: receiving, from another apparatus, at least part of a first encrypted audio signal that corresponds to at least one location of one or more signals, wherein said one or more signals comprises information identifying a user, and wherein the at least part of the first encrypted audio signal is encrypted using a homomorphic encryption algorithm; without homomorphically decrypting the at least part of the first encrypted audio signal, generating, for each user of a plurality of users, a respective second encrypted signal, wherein the respective second encrypted signal corresponds to a computation on the at least part of the first encrypted audio signal with another encrypted signal that identifies a respective user; and providing the another apparatus with the respective second encrypted signals.

According to a seventh aspect, there is provided a method for an apparatus, the method comprising: receiving, from another apparatus, at least part of a first encrypted audio signal that corresponds to at least one location of one or more signals, wherein said one or more signals comprises information identifying a user, and wherein the at least part of the first encrypted audio signal is encrypted using a homomorphic encryption algorithm; without homomorphically decrypting the at least part of the first encrypted audio signal, generating, for each user of a plurality of users, a respective second encrypted signal, wherein the respective second encrypted signal corresponds to a computation on the at least part of the first encrypted audio signal with another encrypted signal that identifies a respective user; and providing the another apparatus with the respective second encrypted signals.

According to an eighth aspect, there is provided an apparatus comprising: receiving circuitry for receiving, from another apparatus, at least part of a first encrypted audio signal that corresponds to at least one location of one or more signals, wherein said one or more signals comprises information identifying a user, and wherein the at least part of the first encrypted audio signal is encrypted using a homomorphic encryption algorithm; generating circuitry for, without homomorphically decrypting the at least part of the first encrypted audio signal, generating, for each user of a plurality of users, a respective second encrypted signal, wherein the respective second encrypted signal corresponds to a computation on the at least part of the first encrypted audio signal with another encrypted signal that identifies a respective user; and providing circuitry for providing the another apparatus with the respective second encrypted signals.

The following may apply in respect of any (e.g., one or more, including all) of the above fifth to eighth aspects.

The apparatus may be caused to perform: providing, to the another apparatus, information for determining the at least one location of the one or more signals located in the first encrypted audio signal before receiving said at least part of the first encrypted audio signal.

The apparatus may be caused to perform: retrieving, from a storage apparatus, information for determining the at least one location of the one or more signals located in at least part of the first encrypted audio signal before receiving said at least part of the first encrypted audio signal.

The information for determining the at least one location of the one or more signals may comprise homomorphically encrypted audio data that does not comprise audio data that identifies an originator of the first encrypted audio signal.

The information for determining the at least one location of the one or more signals may comprise at least one of: respective seed values for generating an identifier of a user, a session identifier, a user identifier, or a public homomorphic key.

The generating, for each user of a plurality of users, a respective second encrypted signal may comprise, for said each user, performing: determining a random value that corresponds to said user; determining a plurality of timestamps indicating where said another encrypted signal is present in the first encrypted audio signal; determining an identifier of said user; determining a session identifier corresponding to the first encrypted audio signal; and generating the respective second encrypted signal based on an algorithm that uses the determined random value, the determined plurality of timestamps, the determined identifier of said user, and the determined session identifier as an input.

According to a ninth aspect, there is provided an apparatus comprising means for performing: providing, to another apparatus, at least part of a first encrypted audio signal that corresponds to at least one location of one or more signals, wherein said one or more signals comprises information identifying a user and wherein the at least part of the first encrypted audio signal is encrypted using a homomorphic encryption algorithm; receiving, from the another apparatus, a plurality of respective second encrypted signals, wherein each of the respective second encrypted signals corresponds to a respective computation on the at least part of the first encrypted audio signal with another encrypted signal that identifies a respective user of the plurality of users; and based on homomorphically decrypting the plurality of respective second encrypted signals, identifying a first user of the plurality of users as being an originator of the at least part of the first encrypted audio signal.

According to a tenth aspect, there is provided an apparatus comprising: at least one processor; and at least one memory comprising code that, when executed by the at least one processor, causes the apparatus to perform: providing, to another apparatus, at least part of a first encrypted audio signal that corresponds to at least one location of one or more signals, wherein said one or more signals comprises information identifying a user and wherein the at least part of the first encrypted audio signal is encrypted using a homomorphic encryption algorithm; receiving, from the another apparatus, a plurality of respective second encrypted signals, wherein each of the respective second encrypted signals corresponds to a respective computation on the at least part of the first encrypted audio signal with another encrypted signal that identifies a respective user of the plurality of users; and based on homomorphically decrypting the plurality of respective second encrypted signals, identifying a first user of the plurality of users as being an originator of the at least part of the first encrypted audio signal.

According to an eleventh aspect, there is provided a method for an apparatus, the method comprising: providing, to another apparatus, at least part of a first encrypted audio signal that corresponds to at least one location of one or more signals, wherein said one or more signals comprises information identifying a user and wherein the at least part of the first encrypted audio signal is encrypted using a homomorphic encryption algorithm; receiving, from the another apparatus, a plurality of respective second encrypted signals, wherein each of the respective second encrypted signals corresponds to a respective computation on the at least part of the first encrypted audio signal with another encrypted signal that identifies a respective user of the plurality of users; and based on homomorphically decrypting the plurality of respective second encrypted signals, identifying a first user of the plurality of users as being an originator of the at least part of the first encrypted audio signal.

According to a twelfth aspect, there is provided an apparatus comprising: providing circuitry for providing, to another apparatus, at least part of a first encrypted audio signal that corresponds to at least one location of one or more signals, wherein said one or more signals comprises information identifying a user and wherein the at least part of the first encrypted audio signal is encrypted using a homomorphic encryption algorithm; receiving circuitry for receiving, from the another apparatus, a plurality of respective second encrypted signals, wherein each of the respective second encrypted signals corresponds to a respective computation on the at least part of the first encrypted audio signal with another encrypted signal that identifies a respective user of the plurality of users; and identifying circuitry for, based on homomorphically decrypting the plurality of respective second encrypted signals, identifying a first user of the plurality of users as being an originator of the at least part of the first encrypted audio signal.

The following may apply in respect of any (e.g., one or more, including all) of the above ninth to twelfth aspects.

The apparatus may be caused to perform: receiving, from the another apparatus, information for determining the at least one location of the one or more signals located in the at least part of the first encrypted audio signal before providing said at least part of the first encrypted audio signal.

The apparatus may be caused to perform: retrieving, from a storage apparatus, information for determining the at least one location of the one or more signals located in the at least part of the first encrypted audio signal before receiving said at least part of the first encrypted audio signal.

The information for determining the at least one location of the one or more signals may comprise homomorphically encrypted audio data that does not comprise audio data that identifies an originator of the first encrypted audio signal.

The information for determining the at least one location of the one or more signals may comprise at least one of: respective seed values for generating an identifier of a user, a session identifier, a user identifier, or a public homomorphic key.

According to a thirteenth aspect, there is provided an apparatus comprising means for performing: receiving, from a first apparatus, information for determining at least one location of one or more signals located in a first encrypted audio signal, wherein the one or more signals comprises information identifying a user in the first encrypted audio signal, and wherein the first encrypted audio signal is encrypted using a homomorphic encryption algorithm; receiving, from a second apparatus, a request for the information for determining at least one location the of one or more signals; and providing the requested information for determining at least one location of the one or more signals to the second apparatus.

According to a fourteenth aspect, there is provided an apparatus comprising: at least one processor; and at least one memory comprising code that, when executed by the at least one processor, causes the apparatus to perform: receiving, from a first apparatus, information for determining at least one location of one or more signals located in a first encrypted audio signal, wherein the one or more signals comprises information identifying a user in the first encrypted audio signal, and wherein the first encrypted audio signal is encrypted using a homomorphic encryption algorithm; receiving, from a second apparatus, a request for the information for determining at least one location the of one or more signals; and providing the requested information for determining at least one location of the one or more signals to the second apparatus.

According to a fifteenth aspect, there is provided a method for an apparatus, the method comprising: receiving, from a first apparatus, information for determining at least one location of one or more signals located in a first encrypted audio signal, wherein the one or more signals comprises information identifying a user in the first encrypted audio signal, and wherein the first encrypted audio signal is encrypted using a homomorphic encryption algorithm; receiving, from a second apparatus, a request for the information for determining at least one location the of one or more signals; and providing the requested information for determining at least one location of the one or more signals to the second apparatus.

According to a sixteenth aspect, there is provided an apparatus comprising: receiving circuitry for receiving, from a first apparatus, information for determining at least one location of one or more signals located in a first encrypted audio signal, wherein the one or more signals comprises information identifying a user in the first encrypted audio signal, and wherein the first encrypted audio signal is encrypted using a homomorphic encryption algorithm; receiving circuitry for receiving, from a second apparatus, a request for the information for determining at least one location the of one or more signals; and providing circuitry for providing the requested information for determining at least one location of the one or more signals to the second apparatus.

The following may apply in respect of any (e.g., one or more, including all) of the above thirteenth to sixteenth aspects.

The information for determining the at least one location of the one or more signals may comprise homomorphically encrypted audio data that does not comprise audio data that identifies an originator of the first encrypted audio signal.

The information for determining the at least one location of the one or more signals may comprise at least one of: respective seed values for generating an identifier of a user, a session identifier, a user identifier, or a public homomorphic key.

According to an aspect, there is provided a non-transitory computer readable medium comprising program instructions that, when executed by an apparatus, cause the apparatus to perform at least the method according to any of the preceding aspects.

In the above, many different embodiments have been described. It should be appreciated that further embodiments may be provided by the combination of any two or more of the embodiments described above.

### DESCRIPTION OF FIGURES

Embodiments will now be described, by way of example only, with reference to the accompanying Figures in which:
Figure 1 shows a representation of an encoder-decoder architecture;
Figures 2A to 2C illustrate example network architecture for conference calls;
Figure 3 shows a representation of an encoder-decoder architecture;
Figures 4 to 6 illustrate example methods that may be performed by apparatus described herein;
Figures 7A to 7D illustrate example methods that may be performed by apparatus described herein;
Figures Figure 8 shows a representation of a control apparatus according to some example embodiments; and
Figure 9 shows a representation of an apparatus according to some example embodiments.

### DETAILED DESCRIPTION

The following relates to one or more methods for audio group calls. In particular, the following relates to one or more methods for use with an audio call that employs a homomorphically-based end-to-end encryption algorithm, where the one or more methods can be used to assist in identifying a recipient of the audio call that leaked audio data from the audio call.

In more detail, there is described a server that receives respective homomorphically encrypted audio data for a call from each of a plurality of different participants of the call. The server subsequently determines a respective encrypted audio mix for each of the participants of the call, the respective encrypted audio mix comprising a mix of the encrypted audio data received from the other participants. The server is also arranged to apply a series of watermarks to the respective encrypted audio mix that identifies the participant for whom that respective encrypted audio mix has been provided. The server is unaware of the raw audio data as it remains in the homomorphic encrypted form while at the server.

A watermark may be embedded in audio data using at least one audio watermarking technique. Audio watermarking techniques embed imperceptible (or minimally intrusive) information into an audio signal to enable identification and tracking while preserving perceptual quality. Example audio watermarking techniques may include, for example:
- Spread spectrum watermarking: In this approach, a noise-like signal is added to the audio, spread across a wide frequency range to resist attacks.
- Echo hiding: Small echoes are added to the signal with delay and amplitude carefully chosen to be imperceptible.
- Additive white gaussian noise (AWGN) watermarking: A low energy gaussian noise pattern containing watermark data is directly added to the audio signal.

The server subsequently provides each of the participants with their respective watermarked encrypted audio signal mix. The participants homomorphically decrypt their respective watermarked encrypted audio signal mix, and plays out the decrypted audio mix. The played out decrypted audio mix comprises at least one audio feature per watermark.

If audio data from the audio call is later leaked, the participant associated with that leaked data may be identified from the watermark. For example, an investigator apparatus that is investigating an origin of the leaked audio data may provide a homomorphically encrypted version of the watermarks in the leaked audio data to the server, which may perform a detect function for indicating which of the participants corresponds to the watermarks in the leaked audio data. At least one method for how this may be performed is further discussed below.

Before such methods, and the apparatus that may perform them, are described in more detail, the following provides a brief overview of audio group calls and encryption methods to provide better context for the presently described methods. It is understood that the expression "audio call" and "audio group call" includes calls that are audio only, and/or calls that comprise audio data in addition to other data (e.g., image data), with the techniques described herein being applicable to the audio data transmitted in any of these cases. It is further understood that the references to audio calls also includes scenarios in which a single participant is speaking and respective watermarked audio streams are provided to each participant.

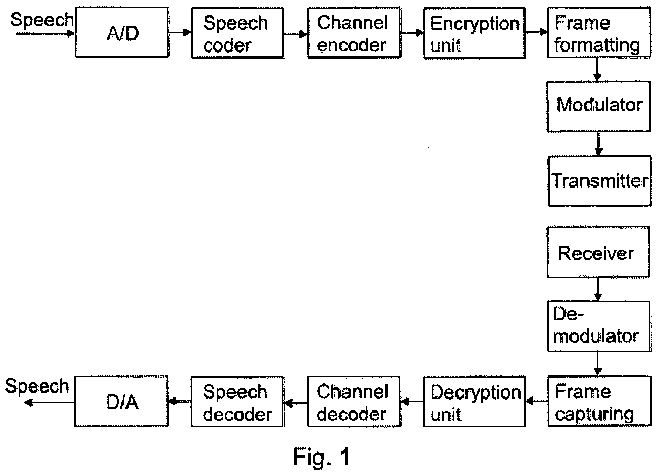

Figure 1 shows, in a simplified form, a conventional transmission chain and reception chain for speech, for instance in a digital mobile terminal or system. The transmit chain comprises a voice input, such as a microphone, an analog to digital (A/D) converter, a voice coder, a channel encoder, an encryption unit, a frame formatting unit, a modulator, and a transmitter. The voice coder outputs coded speech frames, which comprise a plurality of speech bits. The speech frames are input to the channel encoder for channel encoding using error correction and/or error detection codes. The purpose of the error coding is to enable the receiver to detect and correct bit errors that may occur during transmission. The channel encoder implements the encoding method used in a particular communications system. The speech frames may then be protected from interception by encryption. After encryption, the speech frames are formatted for transmission by a frame formatting unit. The frame formatting unit interleaves encrypted bits in the speech frames from the encryption unit, adds necessary synchronization and training bits, and assigns the resulting formatted bits to appropriate timeslots of a frame structure, for instance. The modulator modulates the resulting formatted bits to an assigned radio frequency carrier for transmission by the transmitter.

The receive chain comprises a receiver, a demodulator, a frame capturing unit, a decryption unit, a channel decoder, a voice decoder, a digital to analog (D/A) converter, and a speaker. The receiver receives the speech signals and converts the signals into a suitable format for digital processing. The demodulator demodulates the received signal and provides the demodulated bits to the frame capturing unit, which performs error detection and/or de-interleaving. The decryption unit decrypts demodulated bits received from the frame capturing unit. The decrypted bits output from decryption unit are decoded by the channel decoder. The decoded bits are then provided to the voice decoder.

There may be several apparatus according to the example of Figure 1 that are configured to participate in a same group call (e.g., a call comprising more than two participants).

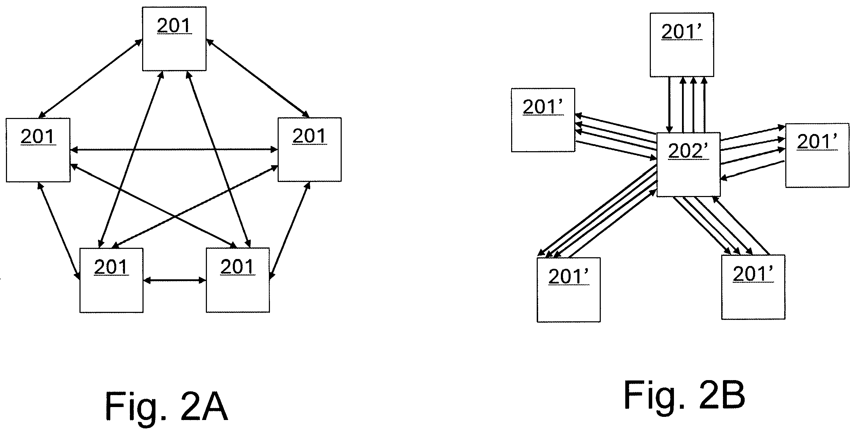

The group call may be performed using at least one of several different types of network configurations: Mesh (also called peer-to-peer (P2P)), Selective Forwarding Unit (SFU), and Multipoint Control Unit (MCU). These are described further below with reference to Figures 2A to 2C.

Figure 2A illustrates a configuration associated with a mesh-type network configuration for implementing a group call. Figure 2A illustrates a plurality of user equipment 201, each of which is configured to separately exchange audio data for participating in a group call with every other user equipment in that group call.

Stated differently, in a mesh-based configuration in the example of Figure 2A, all user equipment are connected to each other and send each other their audio stream. Therefore, in the example of Figure 2A, which illustrates a group call (e.g., a conference call) comprising five user equipment as participants, each user equipment maintains four uplink connections to the other four user equipment, and four downlink connections from the other four user equipment. Assuming each bidirectional link (uplink and downlink) has a bandwidth of approximately 10 Megabit per second (Mbps), this implies that each user equipment uses a bandwidth of approximately 40Mbps.

As each user equipment maintains separate bitstreams for communicating with each of the other user equipment on the audio call, the bandwidth for this mesh-based configuration increases with the number of user equipment. This means that mesh-based configurations do not scale well with increasing numbers of user equipment.

Additionally, it is difficult to synchronize the audio between all these devices in this mesh-based configuration, and in practice, all clients actually hear a different kind of conversation. This is because audio is a very latency sensitive medium for humans and, depending on the physical location of the user equipment, it is difficult to achieve a consistent and seamless audio experience as variations in network latency can significantly affect the timing and quality of audio transmission. This can lead to issues such as echoes, delays and even audio segments dropping out, making it challenging to have a clear and coherent conversation.

Figure 2B illustrates an SFU-based network configuration. As illustrated in Figure 2B, there is a plurality of user equipment 201' configured to transmit audio data to, and receive audio data from a central server 202'. The central server is configured to receive respective audio data from each of the user equipment 201' participating in an audio call, and select only a portion (i.e., less than all) of the received audio data for forwarding to each of the user equipment 201'.

Stated differently, SFU may be considered to operate by receiving individual audio streams from each participant into the cloud. These streams are selected and adjusted, if necessary, and then forwarded to the correct participants. Therefore, in the example of Figure 2B, which illustrates a group call comprising five user equipment as participants, each user equipment maintains a single uplink connection to the central server 202', and up to four downlink connections from the central server (although only three downlink connections are illustrated in Figure 2B). Assuming each link has a bandwidth of approximately 5Mbps, this implies that each user equipment uses a bandwidth of approximately 25Mbps for this SFU case.

This SFU-based approach allows for more efficient use of bandwidth compared to a mesh network because not every client has to send its stream to every other client. Moreover, it offers better scalability and can maintain end-to-end encryption (E2EE) because the server does not decode the streams for mixing. However, in an E2EE setup, each participant will have to receive all individual audio feeds from the server, which increases the bandwidth per participant.

Although there are a plurality of applications that use SFU-based network configurations for telecommunication software, these applications have limited support for E2EE group calls, are limited to a small number of participants, and/or have high bandwidth requirements that scale up to the number of participants as a result of them being based on an SFU mechanism

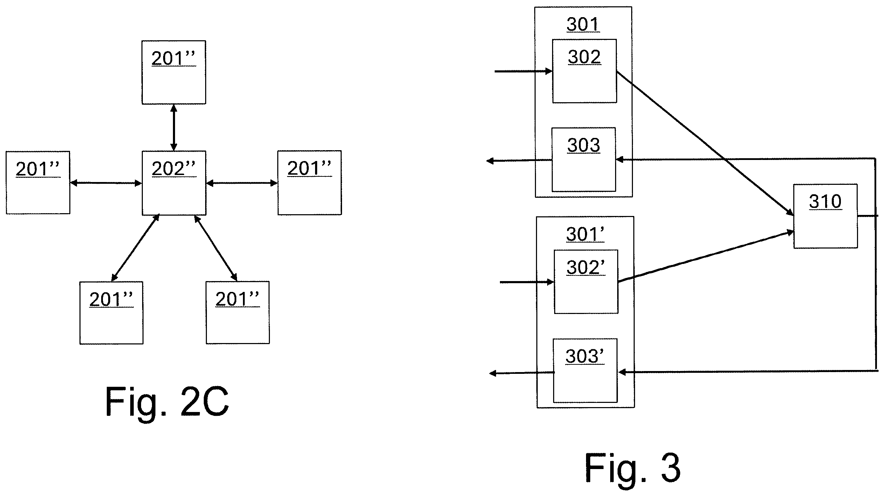

Figure 2C illustrates an example network configuration for an MCU deployment.

As shown in Figure 2C, there is a plurality of user equipment 201" configured to transmit audio data to, and receive audio data from, a central server 202". The central server is configured to receive respective audio data from each of the user equipment 201" participating in an audio call, combine the received audio data to form a combined output, and provide the combined output to each of the user equipment 201".

Therefore, in the example of Figure 2C, which illustrates a group call comprising five user equipment as participants, each user equipment maintains a single uplink connection to the central server 202", and a single downlink connection from the central server. Assuming each link has a bandwidth of approximately 5Mbps, this implies that each user equipment uses a bandwidth of approximately 10 Mbps for this MCU case.

This MCU deployment is technically the most efficient solution for audio calls as (1) all audio is neatly synchronized, (2) all participants hear the same content, and (3) it can be scaled up to many participants (e.g., using Dynamic Adaptive Streaming over Hypertext Transfer Protocol (DASH), Hypertext Transfer Protocol Live Streaming (HLS), or similar protocols).

However, this MCU deployment requires that the central server has access to the raw audio data from each participant. Often, that means the encrypted information from the participant is decrypted in the cloud at the central server (or at a trusted entity that can provide the decrypted data to the central server securely), the audio signals are mixed, and then re-encrypted to distribute the content to all participants. As all the content is readable by the central server, this invalidates the objective of E2EE.

As discussed above, for E2EE calls, the server should not be able to decode the audio streams to generate a single "mixed" audio stream in order to better protect the privacy of the communications. Additionally, to protect the identity of the speaker in such calls, against passive network observers or the server, dummy audio signals would need to be transmitted. In other words, for E2EE compliant calls, adversaries should be unable to learn which participant is talking and who is not. This means the MCU deployments are not considered to be suitable for E2EE compliant communication protocols.

Recently, researchers have considered the application of homomorphic encryption methods (e.g., fully homomorphic encryption (FHE)) for signalling data streams across a network. FHE methods convert data into ciphertext that can be analyzed and worked with as if it were still in its original form. FHE enables complex mathematical operations to be performed on encrypted data without compromising the encryption.

Homomorphic, as used herein, refers to a transformation of one data set into another while preserving relationships between elements in both sets. For example, an encryption algorithm may be considered to be homomorphic when the following relationships hold:Decry(Encry(x1) + Encry(x2)) ≈ x1 + x2 ≈ Decry(Encry(x1)) + Decry(Encry(x2)) where *x*₁ and *x*₂ are raw audio waveforms, *Encry* is the encryption function and *Decry* is the decryption function. Analogous relationships may be expressed for homomorphic encryption algorithms, where the encryption function (e.g., encryption algorithm) is replaced by another type of function (e.g., a compression function) and the decryption function (decryption algorithm) is replaced by an inverse of the another type of function (e.g., decompression algorithm).

In practical terms, assume there are two numbers that have been encrypted separately using a homomorphic encryption method, such as fully homomorphic encryption (FHE). Using a homomorphic encryption method allows these numbers to be added together while still encrypted such that, when the result is decrypted, the sum of the original two numbers is revealed. This process maintains the confidentiality of the data throughout the calculation process.

This is illustrated with respect to an addition operation. In this example, data ((x) and (y)) is independently encrypted into encrypted data (f(x) and f(y)) using an FHE algorithm. An addition computation is performed on the encrypted data to form a computed encrypted data (g(f(x), f(y)), where g() is an algorithm representing an addition operation that is compliant with the FHE algorithm). The computed encrypted data (g(f(x), f(y)) is then decrypted, which returns x+y.

Although more information will be provided on homomorphic algorithms and their properties later, the following provides a brief overview of example configurations for sharing audio data across a network.

FHE methods may be especially useful for audio streaming configurations in which a central server (also referred to herein as a mediator and/or an intermediary apparatus) coordinates signalling between multiple users participating in an audio call, such as the above-described MCU deployments. This is because the MCU deployments would no longer have to access the raw, unencrypted form of the content in order to combine data from different audio streams.

Figure 3 illustrates a deployment scenario in which audio signals that have been encrypted using FHE are mixed at a server. Figure 3 illustrates a first user equipment 301, a second user equipment 301', and a server 310, where the server is located remotely from the first and second user equipment.

The first user equipment 301 is configured to receive a first audio input signal (e.g., from a microphone). The first audio input signal is input to a first FHE encryption apparatus 302 of the first user equipment 301. The first user equipment 301 further comprises a first FHE decryption apparatus 303, which is configured to output via a user interface (e.g., via a speaker). It is understood herein that the term "apparatus" may be read interchangeably with "function" and/or "algorithm" throughout the present application.

The second user equipment 301' is configured to receive a second audio input signal (e.g., from a microphone). The second audio input signal is input to a second FHE encryption apparatus 302' of the second user equipment 301'. The second user equipment 301' further comprises a second FHE decryption apparatus 303', which is configured to output via a user interface (e.g., via a speaker).

In operation, the first FHE encryption apparatus 302 and the second FHE encryption apparatus 302' are configured to output encrypted audio signals to the server 310. The server 310 performs some computations on the received encrypted audio signals to form a combined encrypted audio signal, where the encrypted audio signal comprises data from both of the received encrypted audio signals.

The combined encrypted audio signal is provided to the first FHE decryption apparatus 303 and the second FHE decryption apparatus 303', which both decrypt this combined encrypted audio signal to output via a user interface. The encrypted audio signals and the combined encrypted audio signal utilise a relatively high bandwidth for transmission to and from the server.

By using FHE methods, MCU deployments may be supported as the server may "mix" audio signals at the server side without requiring the decryption at the server side (in contrast to current MCU deployments). Therefore, to mix audio in a privacy preserving way, multiple streams of audio samples can simply be added together in FHE.

It is understood that the signalling described in connection with Figure 3 may be further protected using another form of encryption method. For example, the signalling between at least one of the first and second UEs and the server may be performed using a key encapsulation mechanism (KEM).

KEM is a cryptographic scheme that can be used to establish a shared secret key between two communicating party. KEM may comprise at least the following three algorithms:
- KeyGen (): a key generation algorithm that outputs a public key PK and a private key SK
- Encaps (PK, K): an encapsulation function that takes a public key PK and a randomly chosen key K, and it outputs its encapsulation C.
- Decaps (SK, C): a decapsulation function that takes a private key SK and an encapsulation C, and it returns the secret key K.

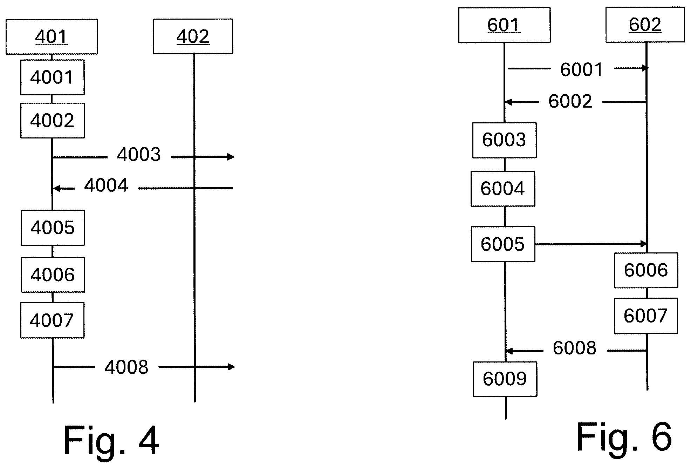

Figure 4 illustrates an implementation example method for generating homomorphic keys for communications for an audio call in which audio data is provided to multiple participants. It is understood that this is merely an example, and that any method may be used for generating the public-private pair of homomorphic keys in combination with the latter described features for applying and detecting watermarks for identifying participants.

In general, the method of Figure 4 relates to each of the participants generating their own, respective, part of a homomorphic private key, receiving the generated parts of the homomorphic private key that were generated by the other participants, and combining the received generated parts and the respective part to form a homomorphic private key (e.g., using a concatenation operation). The homomorphic public key and the homomorphic evaluation key may be determined based on the formed homomorphic key. The signalling used for exchanging the parts of the homomorphic private key may correspond to a protocol that enables the transmissions and receptions of group-wide shared secret keys without requiring a central server, such as Message Layer Security (MLS).

In more detail, the method of Figure 4 aims to provide cryptographic and non-cryptographic materials required for a group E2EE audio call that employs E2EE. This may comprise determining at least one of:
- An FHE public key *pk^{HE}*: this homomorphic public key is created by the participants and shared with all of the participants and a server that will perform the audio mixing for an audio call between the participants.
- An FHE private key *sk^{HE}*: this homomorphic private key is a secret key generated by the participants and only known to the participants and not the server. The homomorphic private key is the same and unique among the participants at any point in time during a call.

As mentioned in later examples, each participant may also generate a respective symmetric key ${sk}_{i}^{sym}$ for communication between that participant and the server. For example, when there are *n* participants in an audio call, participant Pᵢ and the server have the shared symmetric key ${sk}_{i}^{sym}$, and the server comprises shared symmetric keys ${sk}_{1}^{sym} , … , {sk}_{n}^{sym}$. An example symmetric encryption cipher is the Advanced Encryption Standard (AES).

Figure 4 illustrates signalling that may be performed between a first participant 401 and multiple other participants of an audio call via a server 402.

During 4001, the first participant 401 generates a first part of a homomorphic private key.

The following illustrates an example of how the first part of the homomorphic private key may be generated. It is understood that this example is not limiting, and that other methods may be used for determining the first part.

In the present example, the first participant 401 comprises information indicating at least one of the following:
- a security parameter *λ*
- a modulus *q_{L}* for FHE circuit depth L
- a set of participants
- a secure key-encapsulation mechanism KEM

The first participant 401 generates information to be used for generating the first part of the FHE key. In the present example, the FHE key is a CKKS-based FHE key. However, it is understood that other information may be obtained for other types of FHE algorithms.

For the CKKS-based FHE key, the first participant generates a power-of-two *N = N*(*λ*, *q_{L}*) (where *N* scales in proportion with *λ*, *q_{L}*), a first integer *h* (e.g., *h = h(λ, q_{L}*) such that *h* is exactly divisible by the number of participants (n). In other words: (*n* % *h*) = 0), and a second integer *P = P*(*λ, q_{L}*)*.*

The first participant may use these generated outputs *N*, *h*, *P* to generate their share of the private homomorphic key (e.g., to generate the first part).

For example, the first participant may use an input of (*N*, *h*, *n*) to sample a random vector of values *sᵢ* ∈ {-1,0,1}^{*N*/*n*}, where s is a balanced ternary vector of values that has a length of *N*/*n* bits. The vector of values *sᵢ* may have a Hamming weight h/n. The first part may correspond to an output *skᵢ* = (1,*sᵢ*).

During 4002, the first participant encapsulates the generated first part, and, during 4003, sends the encapsulated first part of the fully homomorphic key to the other participants of the audio call. The encapsulation may be performed using the KEM.

For example, the first participant P1 may execute *KEM.Encaps*(*pkⱼ^{KEM}* , *skᵢ*) and outputs *c_{i,j},* where *c_{i,j}* is the encapsulated form of the first part of the private homomorphic key.

During 4004, the first participant receives other parts of the private homomorphic key that have been respectively generated by the other participants of the audio call. The first participant may decapsulate the received other parts of the private homomorphic key.

For example, each participant i uses the KEM to send respective encapsulated *skᵢ* to all the other participants. This means that, for each participant j (e.g., all participant except participant *i*), participant *i* executes *KEM.Encaps*(*pkⱼ^{KEM} , skᵢ*) and outputs *c*_{*i*,*j*}, and participant *i* sends *c_{i,j}* to participant *j*.

Each participant *j* subsequently uses the KEM to decapsulate *c_{i,j}* to obtain *skᵢ.* This may be performed by executing *KEM.Decaps*(*skⱼ^{KEM}*,*c_{i,j}*) and obtain *skᵢ.*

In this example, all of the participants now have each others' respective parts, *sk.* For example, this means that each of the participants will have parts *sk*₁, ... , *sk*₅ when there are 5 participants in the audio call.

During 4006, once of the parts, *skᵢ,* have been obtained from all participants *i,* each participant determines the private homomorphic key by applying a predetermined algorithm for obtaining the private homomorphic key.

As an example, each participant may compute *sk^{HE} = sk*₁∥...∥*skₙ*, where ∥ relates to a concatenation operation.

During 4007, each participant independently computes the corresponding public key *pk^{HE}*to the computed private homomorphic key *sk^{HE}.*

As an example, this may be performed by computing *pk^{HE}* ← (*-a.sk^{HE} + e mod q_{L}, a*), where the output *pk^{HE}* is the same for all participants.

During 4007, each participant may also independently determine an evaluation key *evk* using the computed (*sk, P*). The evaluation key may be used to control the noise growth or the ciphertext expansion during homomorphic evaluation.

As an example, this may be performed by computing *evk* ← (*-a'.sk^{HE} + e' + P*(*s^{HE}*)²,*a*'), where *evk* is the same for all participants.

During 4008, all participants may send their calculated public homomorphic key *pk^{HE}* and/or the evaluation key, *evk,* to each other. The participants may abandon the generated keys re-perform the key generation method when it is determined that at least one of the received public homomorphic key *pk^{HE}* and/or the evaluation key, *evk* differs from the public homomorphic key *pk^{HE}* and/or the evaluation key, *evk* generated by that participant.

As discussed above, although transmissions through a server for a group call may be made more secure by using encryption techniques such as homomorphic encryption methods, individual participants of the audio call (e.g., "users of the audio call" or "recipients of the audio call") may still record audio data of the audio call while the audio data is being played out and release it.

This may especially be a concern during audio calls in which highly sensitive information is provided. These may include, for example, meetings involving corporate boardroom discussions, diplomatic negotiations, military operations, financial trading deals, and more. It is, unfortunately, impossible to stop the participants from secretly recording and maliciously leaking the call.

Moreover, in E2EE group voice calls, it is not trivial to identify the leaking participants and make them accountable. This is, at least in part, because:
- Participants should not be trusted for performing watermarking as a participant could bypass the mechanism that adds the watermarking on the client side. This results in a recording of a non-watermarked signal, which defeats its original purpose;
- Watermark decoding should only be able to be performed by a restricted number of entities to avoid the likelihood of a watermark being removed and/or corrupted; and
- The server is not trusted to view raw audio signals for watermarking for E2EE methods.

The following aims to address one or more of the above-mentioned issues.

For example, the following aims to describe one or more methods that may be used for identifying at least one participant of an audio call associated with leaked audio data of at least part of the audio call.

In more detail, the following considers the provision of at least one method for protecting sensitive audio calls from malicious participants who record and leak at least part of the content of an audio call. The at least one method may be used for detecting a participant who has recorded and distributed an entire audio call or a fragment (e.g., less than all) of an audio call.

Audio signals in the following are encrypted end-to-end by participant apparatus (e.g., user equipment (UE)) using homomorphic encryption (HE), and provided to a server. The server subsequently performs HE-based audio mixing on the received homomorphically encrypted audio signals. The server further generates a watermark for each audio segment that is unique to a combination of a call session and an intended receiving participant of that audio segment. The watermark may be unique to a combination of a call session, an intended receiving participant of that audio segment. and the audio segment. These watermarks may be continuously applied by the server to the mixed audio signals for each participant without decryption (e.g., applied using HE combination algorithms).

When a malicious participant subsequently leaks a recording, an investigator can initiate a leak detection protocol with the server in order to identify the malicious participant from the water marked audio signals. In particular, the investigator and the server cooperate to extract the watermarks from the leaked recording and identify the malicious participant, while ensuring the server does not have access to the decrypted audio signals.

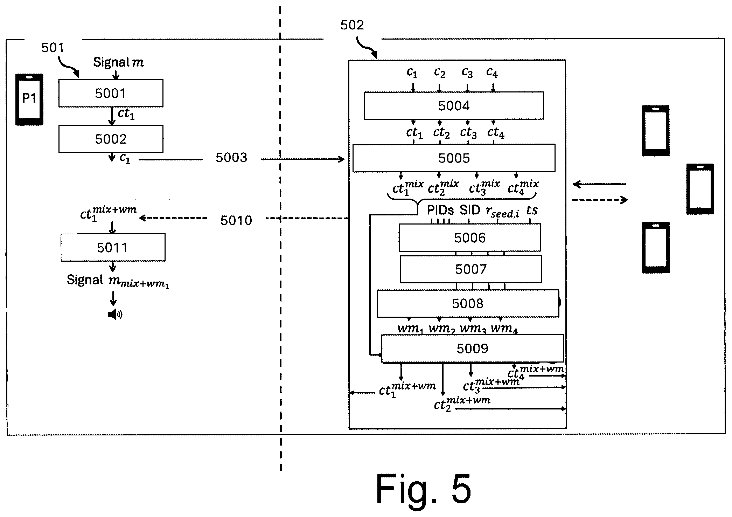

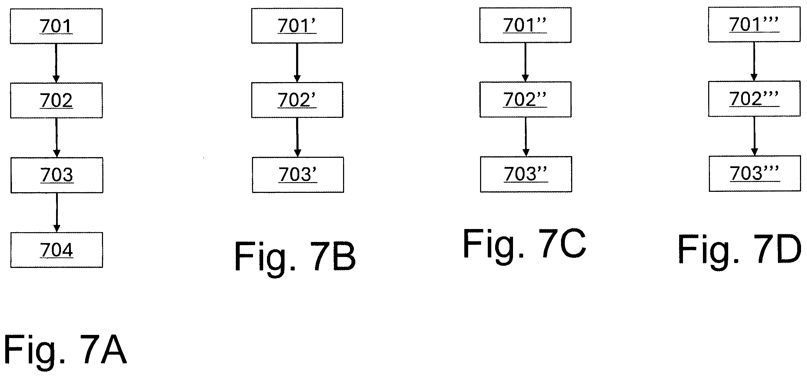

The presently described process will be further illustrated with respect to the examples of Figures 5 to 7D. In these Figures, Figure 5 illustrates an example of how watermarks may be applied to a homomorphically encrypted audio signal by a server, Figure 6 illustrates how such a watermark may be used to identify a participant associated with leaked audio data of an audio call, and Figures 7A to 7D illustrate example methods that may be performed by apparatus described herein.

In the example of Figure 5, each participant may encrypt their audio stream using FHE first, followed by a symmetric cipher. The symmetric cipher functions as a wrapper for communications between that participant and the server. As discussed in more detail below, the symmetric cipher is optional, although it provides some additional benefits to the presently described system.

The participants subsequently send their encrypted audio stream to the server. The server decrypts the symmetric cipher and obtains the FHE-encrypted audio stream for all participants. The server mixes audio streams for each participant, calculates a participant-specific watermark that identifies a participant intended to receive that mixed audio stream, and applies it to the mixed audio stream. This may result in each participant receiving their own audio mix that comprises a unique watermark that identifies that participant. The audio mixing may further be performed so that the intended receiving participant does not receive their own audio stream.

For Figure 5, it is assumed that each participant *Pᵢ* is in a possession of the keys (*pk^{HE},sk^{HE},* ${sk}_{i}^{sym}$)*,* the session identifier (*SID*), and an identifier of that participant (*PIDᵢ*)*.* Similarly, the server possesses the public homomorphic key *pk^{HE}* and the symmetric keys for communicating with each of the participants (e.g., ( ${sk}_{1}^{sym} , … , {sk}_{n}^{sym}$)) and the identifiers *SID,* and (*PID*₁, ... , *PIDₙ*)*.* This may be determined as described above in relation to Figure 4.

**The** following also considers a session as being divided in sections known herein as "epochs". Figure 5 illustrates operations that may be performed in one or more of the epochs.

Figure 5 illustrates at least one method that may be performed by a first participant 501 and a server 502.

During 5001, the first apparatus 501 encrypts an audio signal using an FHE scheme to produce a signal *ctᵢ*. The audio signal may be represented by a set of audio samples of *mᵢ*, where *mᵢ* = (*m*_{*i*,1}, ... , *m*_{*i*,*N*}), and represents a vector of audio signals. For example, where the FHE scheme is CKKS, the first participant computes ${ct}_{i} ← {Enc}_{{pk}^{HE}}^{CKKS} \left({m}_{i}\right)$ .

During 5002, the first apparatus 501 encrypts the FHE-encrypted signal (e.g., *ctᵢ*) using a symmetric key. For example, the first apparatus 501 encrypts *ctᵢ* with a symmetric key shared between the first apparatus 501 (e.g., the ith participant, *Pᵢ*), and the server to produce a signal, *cᵢ*. Stated differently, the first apparatus applies a symmetric key-based encryption function ${Enc}_{{sk}_{i}^{sym}}^{sym}$ on *ctᵢ* to obtain a signal, *cᵢ*. The first user apparatus 501 therefore computes ${c}_{i} ← {Enc}_{{sk}_{i}^{sym}}^{sym} \left({ct}_{i}\right)$ during 5002.

It is understood that although 5002 does not need to be performed in accordance with the presently described aim of determining an originator of leaked audio signals from an audio call, the use of a second encryption method in addition to the FHE encryption may be associated with at least one additional advantage.

For example, encrypting *ctᵢ* using a cipher may help to prevent man-in-the-middle adversaries attacking the audio content, and may be additionally used to ensure the integrity of FHE ciphertexts in transit. Further, although an asymmetric cipher may be used, a symmetric cipher like AES may be considerably more simple to implement than the asymmetric cipher.

During 5003, the first apparatus 501 signals the server 502. This signalling may comprise *cᵢ*.

During 5004, the server 502 decrypts the symmetric layer of the ciphertexts received from all of the participants of the call (e.g., the first apparatus 501 and at least one other participant on the audio call that performs the same operations as the first apparatus 501), to obtain the corresponding FHE-encrypted ciphertexts. Stated differently, the server 502 decrypts the ciphertexts received from all of the participants of the call (e.g., ciphertexts (*c*₁, ... , *cₙ*)) using a symmetric decryption function to obtain the FHE-encrypted ciphertexts (e.g., (*ct*₁, ... , *ctₙ*))*.* During 5004, the server may therefore be said to compute ${ct}_{i} ← {Dec}_{{sk}_{i}^{sym}}^{sym} \left({c}_{i}\right)$, for all *i* = 1 ... *n.*

During 5005, the server performs a frequency mixing function *fₘᵢₓ* on an FHE-encrypted domain (e.g., on the FHE-encrypted ciphertexts (e.g., (*ct*₁, ... , *ctₙ*)) to produce an output of e.g., ( ${ct}_{1}^{mix} , … , {ct}_{n}^{mix}$). The frequency mixing function is performed so that, for participant i, an FHE-encrypted-frequency mix is obtained that combines the audio received from the other users in the audio call and that excludes the audio from participant i.

Stated differently, during 5005, the server 501 computes ${ct}_{i}^{mix} = FHE . Evaluate \left({f}_{mix}, {\left({ct}_{1},…,{ct}_{n}\right)}^{\ \left\{{ct}_{i}\right\}}\right)$ where (*ct*₁, ... ,*ctₙ*)^{*\*{*cti*}} excludes *ctᵢ* of participant *i.* The output of ${ct}_{i}^{mix}$ may be considered to be equal to ${Enc}_{{pk}^{HE}}^{CKKS} \left({f}_{mix}\left({m}_{1},…,{m}_{n}\right)\right)$, where *mᵢ* represents an audio vector received from participant *Pᵢ*.

The server may subsequently perform a watermarking function on each of the mixes (*ct*₁, ... *, ctₙ*)*.*

If the mix (*ct*₁, ... , *ctₙ*) being considered is not intended to be watermarked by the server, the server stores the current ${ct}_{i}^{mix}$ in memory (and disk) and does not perform the steps of 5006 to 5009. Otherwise, if ${ct}_{i}^{mix}$ is a batch of signals that must be watermarked, no storage is needed, and the server proceeds to 5006 and proceeds to apply at least one watermark to a homomorphically encrypted audio mix that identifies the intended receiving participant of that homomorphically encrypted audio mix. Storing unwatermarked ${ct}_{i}^{mix}$ may be used to find the watermarked segments later when the leak detection methods are deployed. The stored unwatermarked ${ct}_{i}^{mix}$ are also labelled herein as "Hints".

5006 to 5009 illustrate operations that may be performed for generating a watermark that identifies an intended recipient of a particular audio mix and applying that watermark to the particular audio mix. It is understood that these are merely examples, and that the watermark may be generated using other methods.

The watermarking steps of 5006 to 5009 may be performed periodically on a received audio stream. For example, the watermarking steps of 5006 to 5009 may be performed every *x* (milli)seconds. Stated differently, although the entire call can be watermarked, it is not necessary to watermark the entire call. The frequency at which the watermarking steps of 5006 to 5009 are performed may be determined based on receipt of an indication from at least one of the participants indicating how active an audio call is (e.g., more silence may correspond to more watermarking to increase the likelihood of watermarking unique audio data). The watermarking may correspond to at least one of the above-mentioned audio watermarking techniques. For example, the watermarking may correspond to at least one of:
- Spread spectrum watermarking: In this approach, a noise-like signal is added to the audio, spread across a wide frequency range to resist attacks.
- Echo hiding: Small echoes are added to the signal with delay and amplitude carefully chosen to be imperceptible.
- Additive white gaussian noise (AWGN) watermarking: A low energy gaussian noise pattern containing watermark data is directly added to the audio signal.

In the following example, a respective watermark label is crafted for each participant such that no two participants in the call have the same watermark. The described example also uses the output of a hash function in order to be pseudorandom against adversaries.

During 5006, a hash function of the server 502 receives a session identifier for the audio call, identifiers of the participants of the audio call (e.g., the above-mentioned PIDs), a time stamp value corresponding to when the watermark is to be applied, and a random seed value for each participant (e.g., *r_{seed,i}*). The hash function outputs a resulting respective hash for each participant of the audio call to a preprocessing function of the server for preprocessing during 5007.

In general, during 5006, the server generates an audio watermark based on the identifier of the call and each participant. Stated differently, during 5006, the server generates a particular (e.g., respective) watermark label for each participant of the audio call that is unique for each participant and encrypts that watermark label.

In a particular example, for each participant i, the server may perform the following steps during 5007.

First, the server generates a respective random seed *r_{seed,i}* for each participant and stores it if this is the first segment to watermark for this participant. Otherwise, the server may load *r_{seed,i}* to compute a current random value (e.g., *r_{this,i}*) for the audio signal being watermarked. Stated differently, the server may compute *r*_{*this*,*i*} ← *CSPRNG*(*r_{seed,i}*) for the first audio segment being watermarked, and compute *r*_{*this*,*i*} ← *CSPRNG*(*r_{previous,i}*) for watermarking of a subsequent audio segment, where *r*_{*this*,*i*} is stored as *r_{previous,i}* for use in computing the *r*_{*this*,*i*} for watermarking the next segment. *CSPRNG* may be considered to be a cryptographically secure pseudorandom number generator.

Second, the server generates a watermark secret label for a participant i, where the watermark secret label may be labelled as *wᵢ.* The watermark secret label may be generated using *wᵢ* ← *Hash*(*SID, PIDᵢ, r_{this,i}, t*), where (*rᵢ,t*) are respectively a random value generated as described above for *r*_{*this*,*i*} and a timestamp, and *Hash* is a hash function. The generated secret label *wᵢ* is only known to the server. This is to avoid the likelihood of other entities removing an applied watermark.

During 5007, the server performs a pre-processing procedure on the watermark label *wᵢ*. This is an optional step that may be defined by particular watermarking techniques (e.g., those watermarking techniques comprising Spread Spectrum).

During 5008, the server homomorphically encrypts the watermark label *wᵢ* (whether pre-processed or not). Stated differently, during 5008, the server determines ${wm}_{i} ← {Enc}_{{PK}^{HE}}^{CKKS} \left({w}_{i}\right)$.

During 5009, the server applies the encrypted watermark label to a respective audio mix associated with that participant. Stated differently, during 5009, the server has a watermarking function *f_{wm}* that takes an encrypted watermark corresponding to a particular participant and applies that encrypted watermark to the mixed audio signal that also corresponds to that particular participant. The watermarking function *f_{wm}* can be any well-known watermarking technique. These techniques vary from adding noise using ultrasound, echo modulation (hiding), and spread spectrum to ML-based approaches such as Audio-Seal by Meta. Although any audio watermarking can be applied to the audio, the following assumes that a noise-additive approach such as spread spectrum is used as this technique is computationally more compatible with homomorphic encryption.

Therefore, for each participant *i*, the server generates a watermarked audio segment ${ct}_{i}^{mix + {wm}_{i}}$ to be provided to an ith participant, where ${ct}_{i}^{mix + {wm}_{i}} = FHE . Evaluate \left({f}_{wm}, {wm}_{i}, {ct}_{i}^{mix}\right)$ . The server may store (or cause to store) ${ct}_{i}^{mix + {wm}_{i}}$ for the participant i for later performance of the leak detection method. As will be discussed later, the server may store (or cause to store) data that is used to generate a particular watermark (e.g., a session identifier, a participant identifier, a random seed for that participant, and a time at which the watermark is generated). This data may be used for regenerating the particular watermark at a later point in time.

During 5010, the server provides each participant with their respective watermarked audio mix. Stated differently, during 5010, the server provides ${ct}_{i}^{mix + {wm}_{i}}$ to participant *i*, for *i* = 1, ..., *n*. Stated differently, during 5010, the server provides ${ct}_{1}^{mix + {wm}_{1}}$ to the first apparatus 501. Although not shown, the respective watermarked audio mix may be encrypted using the symmetric key encryption method described above.

During 5011, the first apparatus 501 decrypts the received the ${ct}_{i}^{mix + wm}$, decrypts the symmetric ciphertext, the FHE ciphertext, and causes the resulting obtained audio signal to be played out.

For example, during 5011, the first apparatus 501 determines *m*_{*mix*+*vm*} is vector of audio samples that can be played using an audio player, ${m}_{mix + wm} = {f}_{mix} \left({m}_{1},…,{m}_{n}\right) + {wm}_{i} ← {Dec}_{{sk}^{HE}}^{CKKS} \left({ct}_{i}^{mix + wm}\right)$ , and sends *m*_{*mix*+*wm*} to an audio player (e.g., headphones, speakers, etc.).

Figure 6 illustrates a method that may be used for identifying a participant associated with a leaked audio from an audio call. It is understood that the leaked audio may correspond to only a part (e.g., less than all) of the total audio call, although the total audio call may be leaked in some examples.

The method of Figure 6 may be especially useful for identifying a participant associated with the leaked audio without decrypting the audio ciphertexts at the server.

In general, the server (or an entity that stores unwatermarked hints) sends unwatermarked hints to an investigator of the audio leak. The investigator may be a participant, a host, or any other entity that is arranged to identify the participant associated with the leaked audio. The investigator may comprise the private homomorphic key and the public homomorphic key. It is understood that where multiple homomorphic keys are used during a single session, the investigator may comprise multiple homomorphic public-private key pairs. In contrast, the server may comprise the public homomorphic key(s). The server may further comprise access to all of the random number seeds used for watermarking audio segments and the unwatermarked hints (mentioned above) that immediately precede the watermarked audio segments. As mentioned above, a hint may correspond to a few milliseconds of encrypted audio right before a watermarking segment starts. These hints may be used to find a starting offset where watermarking segments begin.

The investigator uses the received hints to find the starting offset of the first watermarked segment (in the leaked audio fragment). As a result, the investigator extracts all watermarked segments within the leaked fragment. The investigator encrypts the extracted watermarked segments using FHE and sends the encrypted watermarked segments to the server.

The server uses its stored data gathered from the call (e.g., the unwatermarked hints and the random seeds) to regenerate the secret watermarking labels for the specific leaked watermarked segments. Using FHE, the server takes the labels and the leaked segments as input and executes the watermark-detection procedure. Since the detection procedure is executed homomorphically, the output remains encrypted to the server and can be only decrypted by the investigator. Therefore, the server sends back the result to the investigator for the investigator to identify the participant corresponding to the leaked audio.

Figure 6 illustrates at least one method that may be performed for identifying the participant corresponding to the leaked audio by an investigator 601 and a server 602. The server 602 may be the same server as the server of Figure 5. The server 602 may be a different server to the server of Figure 5.

6001 to 6002 relate to the retrieval of the above-mentioned hints. It is understood that although the following illustrates the investigator obtaining the hints from the server 602, it is understood that the investigator may instead retrieve the hints from another apparatus that stores the hints on behalf of the server 502 performing the watermarking of Figure 5.

During 6001, the investigator 601 signals the server 602. This signalling may comprise a request for hints relating to a leaked audio. The request may identify the audio call (e.g., by the session identifier).

During 6002, the server 602 provides p hints to the investigator 601, where there are p watermarked segments in total stored in the server. It is understood that fewer than p hints may be provided to the investigator during 6002 in order to reduce the likelihood of the watermark locations being determined. In such a case, the request of 6001 may comprise an indication of a time (e.g., an approximate time) for which hints are requested (e.g., first half of call, middle of call, end of call, etc.).

Stated differently, during 6002, the server 602 sends hints { *h*₁, ... *, hₚ*} to the investigator.

During 6003, the investigator 601 homomorphically decrypts the received hints to obtain decrypted hints.

During 6004, the investigator 601 determines which parts of the leaked audio data correspond to the watermarked segments. As a leaked watermarked audio fragment can be only a small part of a much longer audio session, finding which watermarks are in the fragment and the exact starting offset of the watermarks is not trivial and can involve a large amount of processing resources. The output of this step may correspond to a set of k audio segments, all of which are watermarked by at least one identifier corresponding to (e.g., identifying) the participant corresponding to the leaked audio data.

During 6005, the investigator homomorphically encrypts the identified watermarked segments (e.g., the set of k audio segments) to produce the set {*f_{x,i}*, ... *, f_{x,j}*}, and sends the homomorphically encrypted set of identified watermarked segments {*f_{x,i}*, ... , *f_{x,j}*}. to the server 602. In this example, the notation *f_{x,i}* may correspond to an encrypted watermark segment i for participant x.

During 6006, the server 602 may re-generate the watermarks that were generated during Figure 5. For example, the server 602 may use the stored random seeds and use *CSPRNG* to generates the random values used in generation of each watermark label for all participants.

For example, for the generation of watermark label of segment 3 for participant 4, it requires the pseudo-random value *r*_{3,4}. Using this notation, for participant 4 the server 602 may obtain the following random values for the first three segments:
*r*_{1,4} ← *CSPRNG*(*r*_{*seed,*4})
*r*_{2,4} ← *CSPRNG*(*r*_{1,4})
*r*_{3,4} ← *CSPRNG*(*r*_{2,4})

The server subsequently uses the generated random values, corresponding timestamps, PIDs and SID to generate the watermarking labels {*wᵢ*, ... , *wⱼ*}, as described above in relation to Figure 5. It is understood that 6006 may involve additional, alternative, and/or fewer inputs depending on the watermarking technique used during the watermarking of the original audio of Figure 5.

During 6007, the server 602 uses the re-generated watermarks for all timestamps for all participants and the received watermarked segments of 6005 to perform FHE-based watermark detection.

For example, for each participant *Pi* in the audio call (e.g., {*P*1, ...,*P*n}) and for each watermark label *w* in {*wᵢ*, ... , *wⱼ*} and encrypted watermarked segment *fₓ* in {*f_{x,i}*, ... , *f_{x,j}* }, the server determines *Enc_{FHE}*(*resultₚₐᵣ*) ← *FHE.evaluate*(*DETECT, w, fₓ*) where the function *DETECT* is the watermark detection function of the watermarking technique. In this step, the *DETECT* function is executed homomorphically using FHE. The *DETECT* function may be arranged to detect a correlation between the regenerated watermark labels and the homomorphically encrypted watermarked segments.

During 6008, the server 602 provides the results of the *DETECT* function for each participant to the investigator. For example, during 6008, the server 602 provides the following to the investigator:
- Participant 1: *Enc_{FHE}*(*result*_{1,*i*}), ... , *Enc_{FHE}*(*result*_{1,*j*})
- ...
- Participant *n*: *Enc_{FHE}*(*result_{n,i}*), ... , *Enc_{FHE}*(*result_{n,j}*)

During 6009, the investigator homomorphically decrypts the results of the *DETECT* function to determine which participant corresponds to the leaked the audio.

**At** least one feature of the above-mentioned examples is illustrated with respect to Figures 7A to 7D, which illustrates methods that may be performed by apparatus described herein.

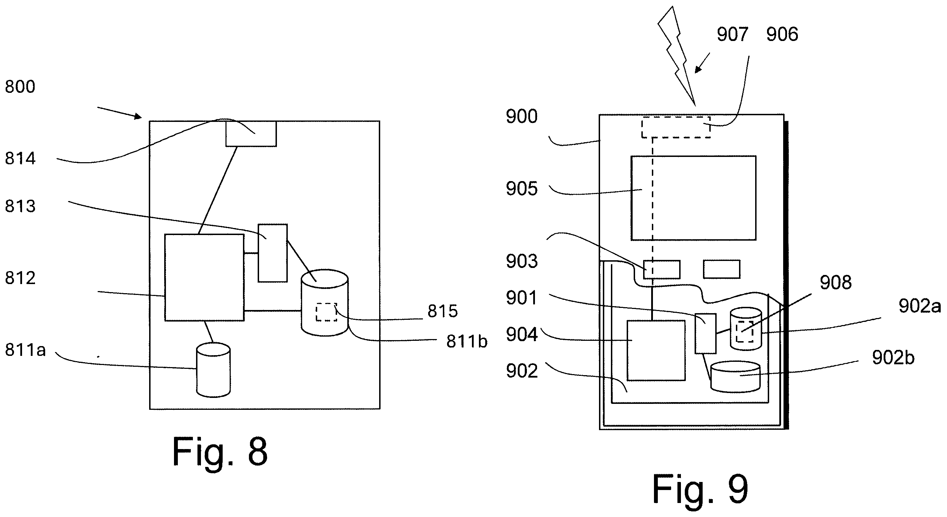

Figure 7A illustrates at least one method that may be performed by apparatus described herein. The apparatus may perform at least one action described above in relation to a server that applies watermarks to a homomorphically encrypted audio signal. The apparatus may comprise, or otherwise be comprised in, a server that acts as a hub for a group call. The method(s) of Figure 7A may be performed by an apparatus as described below in relation to Figure 8.

During 701, the apparatus receives a first encrypted audio signal from a first user, wherein the first encrypted audio signal is encrypted using a homomorphic encryption algorithm. The first user may comprise a first user equipment. The first user may comprise apparatus as described below in relation to Figure 9. The first user may comprise an apparatus associated with (e.g., via a registration of the association maintained by at least one server) a subscription that identifies the first user.

During 702, the apparatus identifies a second user as an intended recipient of the first encrypted audio signal. The second user may comprise a second user equipment. The second user may comprise apparatus as described below in relation to Figure 9. The second user may comprise an apparatus associated with a subscription that identifies the user. In some examples, the first user may be a same user as the second user. In other example, the first user and the second user may be different users to each other.

During 703, without homomorphically decrypting the first encrypted audio signal, the apparatus may perform one or more computations on the first encrypted audio signal using a first algorithm to form a first computed encrypted audio signal that combines the first encrypted audio signal with one or more other signals, wherein the one or more other signals identifies the second user in the first computed encrypted audio signal. Stated differently, the one or more other signals identifies the intended recipient of the first computed encrypted signal.

During 704, the apparatus provides the first computed encrypted audio signal to the second user. The providing of 704 may comprise transmitting.

The one or more other signals may comprise at least one signal that manifests in a homomorphically decrypted version of the first computed encrypted signal as an audio feature (e.g., as audio data at at least one frequency). The one or more signals may comprise at least one of: a spread spectrum signal, a signal replicating at least one property of noise; a signal formed using echo modulation; or a signal formed based on at least one machine learning inference.

The performing one or more computations of 703 may comprise actions that combines at least one watermark with the first encrypted audio signal that identifies the second user. For example, the performing the one or more computations may comprise: associating a first random value to the second user; determining a label for the one or more other signals based on at least one of a session identifier, a user identifier of the second user, the first random value, a public homomorphic key associated with the homomorphic encryption algorithm, or a timestamp at which the one or more other signals is to be played out in a homomorphically decrypted form of the first computed encrypted audio signal; homomorphically encrypting the one or more other signals using the homomorphic encryption algorithm to form one or more encrypted other signals; and combining the one or more encrypted other signals and the first encrypted audio signal.

The random value may comprise a random seed value, a random value generated based on a random seed value, or a random value generated based on a random value generated using a random seed value.

Although Figure 7 refers to a first and a second user, it is understood that the presently described techniques may be expanded to include more than two users. In such a case, the first computed encrypted audio signal may comprise a mix of respective homomorphic encryption signals received from the first and third users and the one or more other signals that identifies the second user in the first computed encrypted audio signal.

For example, the apparatus may receive a third encrypted audio signal from a third user, wherein the third encrypted audio signal is encrypted using a homomorphic encryption algorithm, and without homomorphically decrypting the third encrypted audio signal, performing one or more computations to comprise the third encrypted audio signal in the first computed encrypted audio signal. Such techniques may be further expanded to include further users, such as fourth users, fifth users, etc.

The apparatus of Figure 7 may further provide the first user with a homomorphically encrypted audio signal that comprises audio data from other users on the audio call and encrypted audio information identifying the first user (e.g., that comprises an audio watermark that can be used to identify the first user).

For example, the apparatus may receive a fourth encrypted audio signal from the second user, wherein the fourth encrypted audio signal is encrypted using a homomorphic encryption algorithm, identify the first user as an intended recipient of the fourth encrypted audio signal, without homomorphically decrypting the fourth encrypted audio signal, perform one or more computations on the fourth encrypted audio signal using the first algorithm to form a second computed encrypted audio signal that combines the fourth encrypted audio signal with at least one other signal, wherein the at least one other signal identifies the first user in the second computed encrypted audio signal, and provide the second computed encrypted audio signal to the first user.

The first encrypted audio signal may be further encrypted by a first symmetric key, and the apparatus may further decrypt the first encrypted audio signal before performing said one or more computations on the first encrypted audio signal.

The apparatus may encrypt the first computed encrypted audio signal using a second symmetric key before said providing the first computed encrypted audio signal to the second user. For example, the first user and the apparatus may be configured to exchange signals based on (e.g., using) a first symmetric key (e.g., sk1) and the second user and the apparatus may be configured to exchange signals based on (e.g., using) a second symmetric key (e.g., sk2).

The one or more other signals may cause at least one audio feature that can identify the intended recipient of the first computed encrypted audio signal to be inserted at predetermined intervals. For example, the one of more other signals may comprise audio data at predetermined time intervals. The predetermined time intervals may result in, for example, a periodic watermarking of the first encrypted audio signal to form the first computed encrypted audio signal.

The apparatus may cause at least one storage to store the above-described hints. For example, parts of the first encrypted audio signal immediately preceding (e.g., in the time domain) those parts of the first encrypted audio signal that are combined with the one or more other signals may be stored (e.g., by the apparatus, or by another apparatus, such as an external memory store or another server, such as described below in connection with Figure 7B).

Figures 7B and 7C illustrate at least one method that may be performed for identifying a user based on the audio watermarking

Figure 7B illustrates at least one method that may be performed by apparatus described herein. The apparatus may perform at least one action described above in relation to a server that applies watermarks to a homomorphically encrypted audio signal. The apparatus may comprise, or otherwise be comprised in, a server that acts as a hub for a group call. The method(s) of Figure 7B may be performed by an apparatus as described below in relation to Figure 8.

During 701', the apparatus receives, from another apparatus, at least part of a first encrypted audio signal that corresponds to at least one location of one or more signals, wherein said one or more signals comprises information identifying a user, and wherein the at least part of the first encrypted audio signal is encrypted using a homomorphic encryption algorithm.

The another apparatus may correspond to the apparatus of Figure 7C. The user may be at least one of the first user, or second user described above in relation to Figure 7A.

During 702', without homomorphically decrypting the at least part of the first encrypted audio signal, the apparatus generates, for each user of a plurality of users, a respective second encrypted signal, wherein the respective second encrypted signal corresponds to a computation on the at least part of the first encrypted audio signal with another encrypted signal that identifies a respective user. Each user of the plurality of users may comprise apparatus as described below in relation to Figure 9.

During 703', the apparatus provides the another apparatus with the respective second encrypted signals.

The apparatus of Figure 7B may provide, to the another apparatus, information for determining the at least one location of the one or more signals located in the first encrypted audio signal before receiving said at least part of the first encrypted audio signal. For example, the apparatus of Figure 7B may be arranged to provide the above-described hints to the another apparatus.

The hints/information may be retrieved from a storage, whether the storage is local to the apparatus of Figure 7B or not local to the apparatus of Figure 7B. For example, the apparatus of Figure 7B may retrieve, from a storage apparatus, information for determining the at least one location of the one or more signals located in at least part of the first encrypted audio signal before receiving said at least part of the first encrypted audio signal. The storage apparatus may be as described below in relation to Figure 7D.

The information for determining the at least one location of the one or more signals may comprise homomorphically encrypted audio data that does not comprise audio data that identifies an originator of the first encrypted audio signal.

The information for determining the at least one location of the one or more signals may comprise at least one of: respective seed values for generating an identifier of a user, a session identifier, a user identifier, or a public homomorphic key.

The apparatus may regenerate the watermarks generated by the apparatus of Figure 7A in order to perform a detection operation for detecting the watermark (as described above).

For example, the apparatus may generate, for each user of a plurality of users, a respective second encrypted signal by performing, for said each user: determining a random value that corresponds to said user; determining a plurality of timestamps indicating where said another encrypted signal is present in the first encrypted audio signal; determining an identifier of said user; determining a session identifier corresponding to the first encrypted audio signal; and generating the respective second encrypted signal based on an algorithm that uses the determined random value, the determined plurality of timestamps, the determined identifier of said user, and the determined session identifier as an input.

Figure 7C illustrates at least one method that may be performed by apparatus described herein. The apparatus may perform at least one action for identifying a user that participated in a group call. The apparatus may be a host that facilitated the group call. The apparatus may comprise, or otherwise be comprised in, a server. The method(s) of Figure 7C may be performed by an apparatus as described below in relation to Figure 8.

During 701", the apparatus provides, to another apparatus, at least part of a first encrypted audio signal that corresponds to at least one location of one or more signals, wherein said one or more signals comprises information identifying a user and wherein the at least part of the first encrypted audio signal is encrypted using a homomorphic encryption algorithm. The another apparatus of Figure 7C may correspond to the apparatus of Figure 7B.

During 702", the apparatus receives from the another apparatus, a plurality of respective second encrypted signals, wherein each of the respective second encrypted signals corresponds to a respective computation on the at least part of the first encrypted audio signal with another encrypted signal that identifies a respective user of the plurality of users.

During 703", based on homomorphically decrypting the plurality of respective second encrypted signals, the apparatus identifies a first user of the plurality of users as being an originator of the at least part of the first encrypted audio signal. Each user of the plurality of users may comprise apparatus as described below in relation to Figure 9.

Where the method of Figure 7C is performed based on a receipt, from a requesting apparatus, of a request for an originator of the at least part of the first encrypted audio signal to be identified, the identified first user of 703' may be provided to at least one of the requesting apparatus, to a third apparatus identified in the request, or output via a display of the apparatus of Figure 7C. The requesting apparatus and/or the third apparatus may comprise a user of the plurality of users, and/or a host that organised and/or hosted the audio call corresponding to the at least part of the first encrypted audio signal.

The apparatus of Figure 7C may receive: from the another apparatus, information for determining the at least one location of the one or more signals located in the at least part of the first encrypted audio signal before providing said at least part of the first encrypted audio signal.

For example, the apparatus of Figure 7C may receive the above-described hints from the another apparatus. The hints may be homomorphically encrypted audio signals that correspond to audio data to be played out immediately before audio data corresponding to the watermarked signals (e.g., before audio data corresponding to the at least part of a first encrypted audio signal that corresponds to at least one location of one or more signals).

The apparatus of Figure 7C may receive, from a storage apparatus, information for determining the at least one location of the one or more signals located in the at least part of the first encrypted audio signal before receiving said at least part of the first encrypted audio signal.

For example, the apparatus of Figure 7C may receive the above-described hints from a storage apparatus. The hints may be homomorphically encrypted audio signals that correspond to audio data to be played out immediately before audio data corresponding to the watermarked signals (e.g., before audio data corresponding to the at least part of a first encrypted audio signal that corresponds to at least one location of one or more signals).

The hints may be used to identify, from the first encrypted audio signal as a whole, the at least part of a first encrypted audio signal that corresponds to at least one location of one or more signals.

The information for determining the at least one location of the one or more signals may comprise homomorphically encrypted audio data that does not comprise audio data that identifies an originator of the first encrypted audio signal.

The information for determining the at least one location of the one or more signals may comprise at least one of: respective seed values for generating an identifier of a user, a session identifier, a user identifier, or a public homomorphic key.

Figure 7D illustrates at least one method that may be performed by apparatus described herein. The apparatus may store the above-described hints. The apparatus may be storage apparatus located in the network. The apparatus may comprise, or otherwise be comprised in, a server. The method(s) of Figure 7D may be performed by an apparatus as described below in relation to Figure 8.

During 701‴, the apparatus receives, from a first apparatus, information for determining at least one location of one or more signals located in a first encrypted audio signal, wherein the one or more signals comprises information identifying a user in the first encrypted audio signal, and wherein the first encrypted audio signal is encrypted using a homomorphic encryption algorithm. The first apparatus may be as described above in relation to Figure 7A. The user may comprise apparatus as described below in relation to Figure 9.

During 702"', the apparatus receives, from a second apparatus, a request for the information for determining at least one location the of one or more signals. The second apparatus may correspond to the apparatus of any of Figures 7B and/or 7C. The first apparatus and the second apparatus may correspond to the same apparatus. The first apparatus and the second apparatus may correspond to different apparatus.

During 703‴, the apparatus provides the requested information for determining at least one location of the one or more signals to the second apparatus.

The information for determining the at least one location may be hint information (e.g., hints), as described above. For example, the information for determining the at least one location of the one or more signals may comprise homomorphically encrypted audio data that does not comprise audio data that identifies an originator of the first encrypted audio signal. The originator may be an entity associated with the playout of an unencrypted version of the first encrypted audio signal.

The information for determining the at least one location of the one or more signals may comprise at least one of: respective seed values for generating an identifier of a user, a session identifier, a user identifier, or a public homomorphic key.

Figure 8 illustrates an example of a control apparatus 800 for causing a network device (such as the above mentioned server) to perform its operations. The control apparatus may comprise at least one random access memory (RAM) 811a, at least on read only memory (ROM) 811b, at least one processor 812, 813 and an input/output interface 814. The at least one processor 812, 813 may be coupled to the RAM 811a and the ROM 811b. The at least one processor 812, 813 may be configured to execute an appropriate software code 815. The software code 815 may for example allow to perform one or more steps to perform one or more of the present aspects. The software code 815 may be stored in the ROM 811b. The control apparatus 800 may be interconnected with another control apparatus 800 controlling another function of the network device. In some embodiments, each function of the network device comprises a control apparatus 800.

Figure 9 illustrates an example of a terminal 900, such as a user equipment mentioned above. The terminal 900 may be provided by any device capable of sending and receiving radio signals, such as the user device described herein. The terminal 900 may provide, for example, communication of data for carrying communications. The communications may be one or more of voice, electronic mail (email), text message, multimedia, data, machine data and so on.

The terminal 900 may receive signals over an air or radio interface 307 via appropriate apparatus for receiving or over a wireline medium (such as, for example, an optical fibre, an ethernet cable, a coaxial cable, and/or a copper telephone cable). The terminal 900 may transmit signals via appropriate apparatus for transmitting radio signals. In Figure 9 transceiver apparatus is designated schematically by block 906. The transceiver apparatus 306 may be provided for example by means of a radio part and associated antenna arrangement. The antenna arrangement may be arranged internally or externally to the mobile device.

The terminal 900 may be provided with at least one processor 901, at least one memory ROM 902a, at least one RAM 902b and other possible components 903 for use in software and hardware aided execution of tasks it is designed to perform, including control of access to and communications with access systems and other communication devices. The at least one processor 901 is coupled to the RAM 902b and the ROM 902a. The at least one processor 901 may be configured to execute an appropriate software code 908. The software code 908 may for example allow to perform one or more of the present aspects. The software code 908 may be stored in the ROM 902a.

The processor, storage and other relevant control apparatus can be provided on an appropriate circuit board and/or in chipsets. This feature is denoted by reference 904. The device may optionally have a user interface such as key pad 905, touch sensitive screen or pad, combinations thereof or the like. Optionally one or more of a display, a speaker and a microphone may be provided depending on the type of the device.

In some exemplary embodiments, the terminal 900 may be an apparatus comprising at least one processor and at least one memory storing instructions that, when executed by the at least one processor, cause a user device to perform examples or embodiments described in this document.

The term "terminal device" refers to any end device that may be capable of wireless communication. By way of example rather than limitation, a terminal device may also be referred to as a communication device, user equipment (UE), a Subscriber Station (SS), a Portable Subscriber Station, a mobile device, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), a machine-type communications (MTC) device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user device", "user equipment" and "UE" may be used interchangeably.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used herein, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term herein, including in any claims. As a further example, as used herein, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Various example embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various example embodiments of the disclosure is set out by the independent claims. The example embodiments and features thereof, if any, described in this disclosure that do not fall under the scope of the independent claims are to be interpreted as examples useful for understanding various example embodiments of the disclosure.

The foregoing description has provided, by way of non-limiting and illustrative examples, a full and informative description of the various example embodiments of this disclosure. However, various modifications and adaptations may become apparent to those skilled in the relevant arts in view of the foregoing description, when read in conjunction with the accompanying drawings and the claims. However, all such and similar modifications of the teachings will still fall within the various example embodiments of the disclosure as set forth in the claims. By way of non-limiting and illustrative example, there is a further example embodiment comprising a combination of one or more example embodiments with any of the other example embodiments previously discussed.

## Claims

1. An apparatus comprising means for performing:
receiving a first encrypted audio signal from a first user, wherein the first encrypted audio signal is encrypted using a homomorphic encryption algorithm;
identifying a second user as an intended recipient of the first encrypted audio signal;
without homomorphically decrypting the first encrypted audio signal, performing one or more computations on the first encrypted audio signal using a first algorithm to form a first computed encrypted audio signal that combines the first encrypted audio signal with one or more other signals, wherein the one or more other signals identifies the second user in the first computed encrypted audio signal; and
providing the first computed encrypted audio signal to the second user.

2. An apparatus as claimed in claim 1, wherein the one or more other signals comprises at least one of: a spread spectrum signal, a signal replicating at least one property of noise; a signal formed using echo modulation; or a signal formed based on at least one machine learning inference.

3. An apparatus as claimed in any preceding claim, wherein the means for performing one or more computations comprises means for performing:
associating a first random value to the second user;
determining a label for the one or more other signals based on at least one of a session identifier, a user identifier of the second user, the first random value, a public homomorphic key associated with the homomorphic encryption algorithm, or a timestamp at which the one or more other signals is to be played out in a homomorphically decrypted form of the first computed encrypted audio signal;
homomorphically encrypting the one or more other signals using the homomorphic encryption algorithm to form one or more encrypted other signals; and
combining the one or more encrypted other signals and the first encrypted audio signal.

4. An apparatus as claimed in any preceding claim, further comprising means for performing:
receiving a third encrypted audio signal from a third user, wherein the third encrypted audio signal is encrypted using a homomorphic encryption algorithm; and
without homomorphically decrypting the third encrypted audio signal, performing one or more computations to comprise the third encrypted audio signal in the first computed encrypted audio signal.

5. An apparatus as claimed in any preceding claim, further comprising means for performing:
receiving a fourth encrypted audio signal from the second user, wherein the fourth encrypted audio signal is encrypted using a homomorphic encryption algorithm;
identifying the first user as an intended recipient of the fourth encrypted audio signal;
without homomorphically decrypting the fourth encrypted audio signal, performing one or more computations on the fourth encrypted audio signal using the first algorithm to form a second computed encrypted audio signal that combines the fourth encrypted audio signal with at least one other signal, wherein the at least one other signal identifies the first user in the second computed encrypted audio signal; and
providing the second computed encrypted audio signal to the first user.

6. An apparatus as claimed in any preceding claim, wherein the first encrypted audio signal is further encrypted by a first symmetric key, and the apparatus further comprises means for performing decrypting the first encrypted audio signal before performing said one or more computations on the first encrypted audio signal.

7. An apparatus as claimed in claim 6, further comprising means for performing encrypting the first computed encrypted audio signal using a second symmetric key before said providing the first computed encrypted audio signal to the second user.

8. An apparatus as claimed in any preceding claim, wherein the one or more other signals comprises audio data at predetermined time intervals.

9. An apparatus comprising means for performing:
receiving, from another apparatus, at least part of a first encrypted audio signal that corresponds to at least one location of one or more signals, wherein said one or more signals comprises information identifying a user, and wherein the at least part of the first encrypted audio signal is encrypted using a homomorphic encryption algorithm;
without homomorphically decrypting the at least part of the first encrypted audio signal, generating, for each user of a plurality of users, a respective second encrypted signal, wherein the respective second encrypted signal corresponds to a computation on the at least part of the first encrypted audio signal with another encrypted signal that identifies a respective user; and
providing the another apparatus with the respective second encrypted signals.

10. An apparatus as claimed in claim 9, further comprising means for providing, to the another apparatus, information for determining the at least one location of the one or more signals located in the first encrypted audio signal before receiving said at least part of the first encrypted audio signal.

11. An apparatus as claimed in any of claims 9 to 10, further comprising means for retrieving, from a storage apparatus, information for determining the at least one location of the one or more signals located in at least part of the first encrypted audio signal before receiving said at least part of the first encrypted audio signal.

12. An apparatus as claimed in any of claims 10 to 11, wherein the information for determining the at least one location of the one or more signals comprises homomorphically encrypted audio data that does not comprise audio data that identifies an originator of the first encrypted audio signal.

13. An apparatus as claimed in any of claims 10 to 12, wherein the information for determining the at least one location of the one or more signals comprises at least one of: respective seed values for generating an identifier of a user, a session identifier, a user identifier, or a public homomorphic key.

14. An apparatus as claimed in any of claims 9 to 12, wherein the means for generating, for each user of a plurality of users, a respective second encrypted signal comprises means for performing, for said each user:
determining a random value that corresponds to said user;
determining a plurality of timestamps indicating where said another encrypted signal is present in the first encrypted audio signal;
determining an identifier of said user;
determining a session identifier corresponding to the first encrypted audio signal; and
generating the respective second encrypted signal based on an algorithm that uses the determined random value, the determined plurality of timestamps, the determined identifier of said user, and the determined session identifier as an input.

15. An apparatus comprising means for performing:
providing, to another apparatus, at least part of a first encrypted audio signal that corresponds to at least one location of one or more signals, wherein said one or more signals comprises information identifying a user and wherein the at least part of the first encrypted audio signal is encrypted using a homomorphic encryption algorithm;
receiving, from the another apparatus, a plurality of respective second encrypted signals, wherein each of the respective second encrypted signals corresponds to a respective computation on the at least part of the first encrypted audio signal with another encrypted signal that identifies a respective user of the plurality of users; and
based on homomorphically decrypting the plurality of respective second encrypted signals, identifying a first user of the plurality of users as being an originator of the at least part of the first encrypted audio signal.

16. An apparatus as claimed in claim 15, further comprising means for receiving, from the another apparatus, information for determining the at least one location of the one or more signals located in the at least part of the first encrypted audio signal before providing said at least part of the first encrypted audio signal.

17. An apparatus as claimed in claim 15, further comprising means for retrieving, from a storage apparatus, information for determining the at least one location of the one or more signals located in the at least part of the first encrypted audio signal before receiving said at least part of the first encrypted audio signal.

18. An apparatus as claimed in any of claims 15 to 16, wherein the information for determining the at least one location of the one or more signals comprises homomorphically encrypted audio data that does not comprise audio data that identifies an originator of the first encrypted audio signal.

19. An apparatus as claimed in any of claims 15 to 17, wherein the information for determining the at least one location of the one or more signals comprises at least one of: respective seed values for generating an identifier of a user, a session identifier, a user identifier, or a public homomorphic key.

20. An apparatus comprising means for performing:
receiving, from a first apparatus, information for determining at least one location of one or more signals located in a first encrypted audio signal, wherein the one or more signals comprises information identifying a user in the first encrypted audio signal, and wherein the first encrypted audio signal is encrypted using a homomorphic encryption algorithm;
receiving, from a second apparatus, a request for the information for determining at least one location the of one or more signals; and
providing the requested information for determining at least one location of the one or more signals to the second apparatus.

21. An apparatus as claimed in claim 20, wherein the information for determining the at least one location of the one or more signals comprises homomorphically encrypted audio data that does not comprise audio data that identifies an originator of the first encrypted audio signal.

22. An apparatus as claimed in any of claims 20 to 21, wherein the information for determining the at least one location of the one or more signals comprises at least one of: respective seed values for generating an identifier of a user, a session identifier, a user identifier, or a public homomorphic key.

23. A method for an apparatus, the method comprising:
receiving a first encrypted audio signal from a first user, wherein the first encrypted audio signal is encrypted using a homomorphic encryption algorithm;
identifying a second user as an intended recipient of the first encrypted audio signal;
without homomorphically decrypting the first encrypted audio signal, performing one or more computations on the first encrypted audio signal using a first algorithm to form a first computed encrypted audio signal that combines the first encrypted audio signal with one or more other signals, wherein the one or more other signals identifies the second user in the first computed encrypted audio signal; and
providing the first computed encrypted audio signal to the second user.

24. A method for an apparatus, the method comprising:
receiving, from another apparatus, at least part of a first encrypted audio signal that corresponds to at least one location of one or more signals, wherein said one or more signals comprises information identifying a user, and wherein the at least part of the first encrypted audio signal is encrypted using a homomorphic encryption algorithm;
without homomorphically decrypting the at least part of the first encrypted audio signal, generating, for each user of a plurality of users, a respective second encrypted signal, wherein the respective second encrypted signal corresponds to a computation on the at least part of the first encrypted audio signal with another encrypted signal that identifies a respective user; and
providing the another apparatus with the respective second encrypted signals.

25. A method for an apparatus, the method comprising:
providing, to another apparatus, at least part of a first encrypted audio signal that corresponds to at least one location of one or more signals, wherein said one or more signals comprises information identifying a user and wherein the at least part of the first encrypted audio signal is encrypted using a homomorphic encryption algorithm;
receiving, from the another apparatus, a plurality of respective second encrypted signals, wherein each of the respective second encrypted signals corresponds to a respective computation on the at least part of the first encrypted audio signal with another encrypted signal that identifies a respective user of the plurality of users; and
based on homomorphically decrypting the plurality of respective second encrypted signals, identifying a first user of the plurality of users as being an originator of the at least part of the first encrypted audio signal.

26. A method for an apparatus, the method comprising:
receiving, from a first apparatus, information for determining at least one location of one or more signals located in a first encrypted audio signal, wherein the one or more signals comprises information identifying a user in the first encrypted audio signal, and wherein the first encrypted audio signal is encrypted using a homomorphic encryption algorithm;
receiving, from a second apparatus, a request for the information for determining at least one location the of one or more signals; and
providing the requested information for determining at least one location of the one or more signals to the second apparatus.

27. A computer-readable medium comprising instructions which, when executed by a computer of an apparatus, cause the apparatus to carry out:
receiving a first encrypted audio signal from a first user, wherein the first encrypted audio signal is encrypted using a homomorphic encryption algorithm;
identifying a second user as an intended recipient of the first encrypted audio signal;
without homomorphically decrypting the first encrypted audio signal, performing one or more computations on the first encrypted audio signal using a first algorithm to form a first computed encrypted audio signal that combines the first encrypted audio signal with one or more other signals, wherein the one or more other signals identifies the second user in the first computed encrypted audio signal; and
providing the first computed encrypted audio signal to the second user.

28. A computer-readable medium comprising instructions which, when executed by a computer of an apparatus, cause the apparatus to carry out:
receiving, from another apparatus, at least part of a first encrypted audio signal that corresponds to at least one location of one or more signals, wherein said one or more signals comprises information identifying a user, and wherein the at least part of the first encrypted audio signal is encrypted using a homomorphic encryption algorithm;
without homomorphically decrypting the at least part of the first encrypted audio signal, generating, for each user of a plurality of users, a respective second encrypted signal, wherein the respective second encrypted signal corresponds to a computation on the at least part of the first encrypted audio signal with another encrypted signal that identifies a respective user; and
providing the another apparatus with the respective second encrypted signals.

29. A computer-readable medium comprising instructions which, when executed by a computer of an apparatus, cause the apparatus to carry out:
providing, to another apparatus, at least part of a first encrypted audio signal that corresponds to at least one location of one or more signals, wherein said one or more signals comprises information identifying a user and wherein the at least part of the first encrypted audio signal is encrypted using a homomorphic encryption algorithm;
receiving, from the another apparatus, a plurality of respective second encrypted signals, wherein each of the respective second encrypted signals corresponds to a respective computation on the at least part of the first encrypted audio signal with another encrypted signal that identifies a respective user of the plurality of users; and
based on homomorphically decrypting the plurality of respective second encrypted signals, identifying a first user of the plurality of users as being an originator of the at least part of the first encrypted audio signal.

30. A computer-readable medium comprising instructions which, when executed by a computer of an apparatus, cause the apparatus to carry out:
receiving, from a first apparatus, information for determining at least one location of one or more signals located in a first encrypted audio signal, wherein the one or more signals comprises information identifying a user in the first encrypted audio signal, and wherein the first encrypted audio signal is encrypted using a homomorphic encryption algorithm;
receiving, from a second apparatus, a request for the information for determining at least one location the of one or more signals; and
providing the requested information for determining at least one location of the one or more signals to the second apparatus.
